# EUROPEAN PATENT SPECIFICATION

(11) **EP 3 826 945 B1**
(45) Date of publication and mention of the grant of the patent: **27.12.2023**
(21) Application number: 19737784.9
(22) Date of filing: 16.07.2019
(51) Int. Cl.: B67B 5/06, B65G 29/00, B67B 5/03, B65G 47/84

(54) **NECK GUIDING DEVICE FOR BOTTLING LINES**
HALSFÜHRUNGSVORRICHTUNG FÜR FLASCHENABFÜLLANLAGEN
DISPOSITIF DE GUIDAGE DE GOULOT POUR LIGNES D'EMBOUTEILLAGE

(30) Priority: 23.07.2018 IT 201800007415
(43) Date of publication of application: 02.06.2021
(73) Proprietor: ROBINO & GALANDRINO S.p.A., 15121 Alessandria (IT)
(72) Inventor: ROSSELLI, Lorenzo, 15010 PONTI (IT); RIVETTI, Riccardo, 14100 ASTI (IT)
(74) Representative: Modiano, Micaela Nadia
(86) International application number: PCT/EP2019/069093
(87) International publication number: WO 2020/020702

(56) References cited:
- EP-A1- 0 520 895
- EP-A1- 2 684 822
- DE-A1-102008 001 285
- JP-A- 2006 298 504
- US-A- 4 488 394
- US-B1- 6 450 230

## Description

The present invention relates to a neck guiding device for bottling lines.

As is known, a generic bottling line for alcoholic beverages such as wines, sparkling wines, champagnes and beers, or non-alcoholic beverages such as water, oil, carbonated drinks, and the like, can comprise a series of stations that are adapted to carry out one or more specific operations on rigid containers, typically bottles which are received in succession.

For example, in a bottling line for sparkling wines, after the bottle has been filled and corked, a wirehooding machine tightens a muselet made of metallic wire around the neck of the bottle. The base of the muselet is conventionally constituted by a ring, also made of metallic wire, which is tightened around the neck by twisting a portion under the annulus, so as to form a tab which ends with an eyelet.

After this, a capsuling machine applies a sealing capsule on the neck of the bottle, which can be made of a plastically-deformable material, typically aluminum foil, or a heat-shrink material.

The neck guiding device according to the present application is particularly advantageous in association with the above-mentioned capsuling machines, and therefore in the present application particular reference will be made to such application, but it can be advantageously applied also to other stations of the bottling line where the same requirements arise, e.g., wirehooding machines, neck hanger distributors, and the like.

In the step of encapsulation, the capsule is initially fitted slack over the neck of the bottle by a distributor; after this, it is made to adhere to the wall of the bottle, by way of folding, smoothing, and rolling operations, or by way of heating, depending on the material of the capsule.

During the distribution of the capsules, the bottles are made to advance continuously by a motorized screw feeder (or another conveyor, e.g., a motorized belt).

The distributor can comprise a horizontal-axis wheel arranged above the motorized screw feeder, which peripherally supports a series of capsule-carrying beakers. The beakers take the capsules in succession from a stack and expel them pneumatically onto the bottles, which advance below them.

In order to distribute the capsule correctly, it is necessary that the beaker and the bottle are presented perfectly aligned, therefore the efficiency of the machine is highly conditioned by the dimensional and shape tolerances of the bottles which, unfortunately, are anything but negligible. For example, in standard production, the neck of the bottle can present a misalignment with respect to the body of as much as 4-5 millimeters at the mouth.

Another factor that can compromise the correct descent of the capsule onto the neck is the muselet, which can have irregularities (e.g. parts which protrude) which can interfere with the capsule in the insertion step.

An additional possible cause of misalignments is the amount of play that is present in the system for guiding the bottle.

The situation is made particularly critical by the extremely high speeds in play, which are determined by the high levels of productivity required (e.g. 400-600 capsules/min).

In order to limit the problem, it is known to guide the bottles at the neck, in the region of the distributor, by way of a dedicated device. The latter can comprise a second screw feeder, parallel to the first, which is positioned so as to engage the bottle at the neck, or a motorized star conveyor with a vertical axis, which is provided with a series of peripheral seats that are contoured to receive the neck of the bottle and position it exactly below the beaker at the point of expulsion of the capsule.

The motorized star conveyor solution described above in effect brings improvements but it has been observed in practice that it does not solve the problem, since the neck of the bottle and the beaker in any case remain aligned at a single point and, as a consequence, the correct insertion remains strongly conditioned by various uncontrollable disturbance factors. US 6 450 230 B1, which discloses the features of the preamble of claim 1, discloses a labeling apparatus in which the bottles are guided along a path by two starwheels which cooperate with an arcuate guide.

The aim of the present invention is to provide a neck guiding device for bottling lines that is capable of considerably increasing the efficiency of the machine with which it is associated, in particular a capsuling machine in the application to which the present application refers, without reducing, and even increasing, productivity.

The above aim and other objects, which will become clear from the description that follows, are achieved by a neck guiding device having the characteristics recited in the appended claim 1, while the appended dependent claims define other characteristics of the invention which are advantageous, although secondary.

The invention will be described in more detail, with reference to some preferred, but not exclusive, embodiments thereof, which are illustrated for the purposes of non-limiting example in the accompanying drawings, wherein:
Figures 1, 3, 5, 7, 9 are five side views of a capsuling machine to which a neck guiding device according to the invention is applied, in five respective successive steps of operation;
Figures 2, 4, 6, 8, 10 are five plan views of the capsuling machine in the five steps of operation in Figures 1, 3, 5, 7, 9 respectively, in which some parts have been omitted for greater clarity of illustration;
Figure 11 is an axial cross-sectional view of the neck guiding device according to the invention in a first operating configuration;
Figure 12 is an axial cross-sectional view of the neck guiding device according to the invention in a second operating configuration;
Figure 13 is a schematic plan view of a neck guiding device incorporated in a capsuling machine in a first alternative example not according to the invention,
Figure 14 is a schematic plan view of a neck guiding device incorporated in a capsuling machine in a second alternative embodiment of the invention.

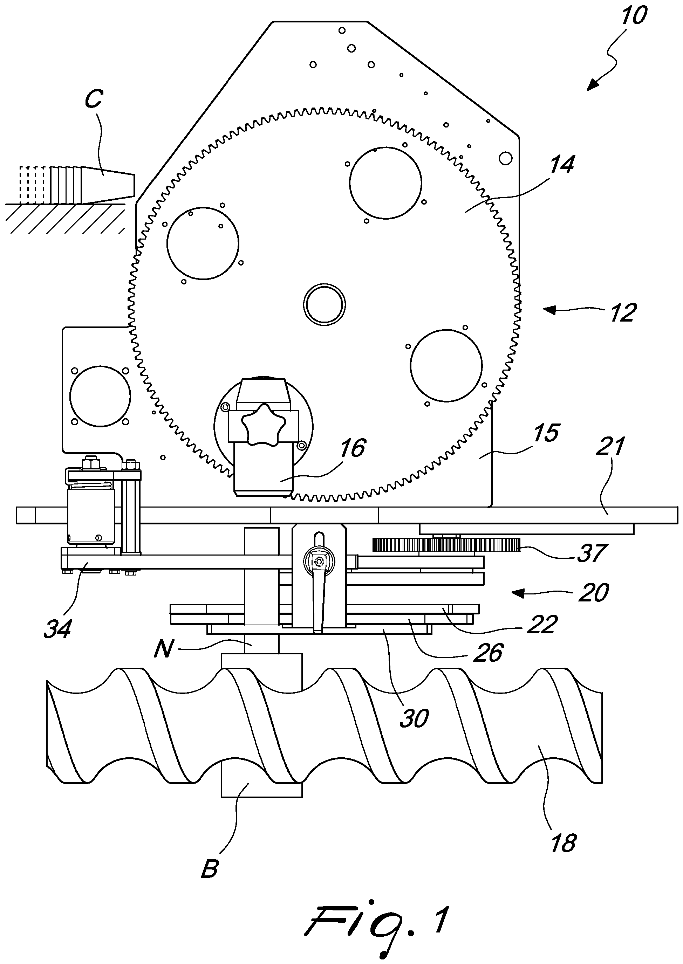

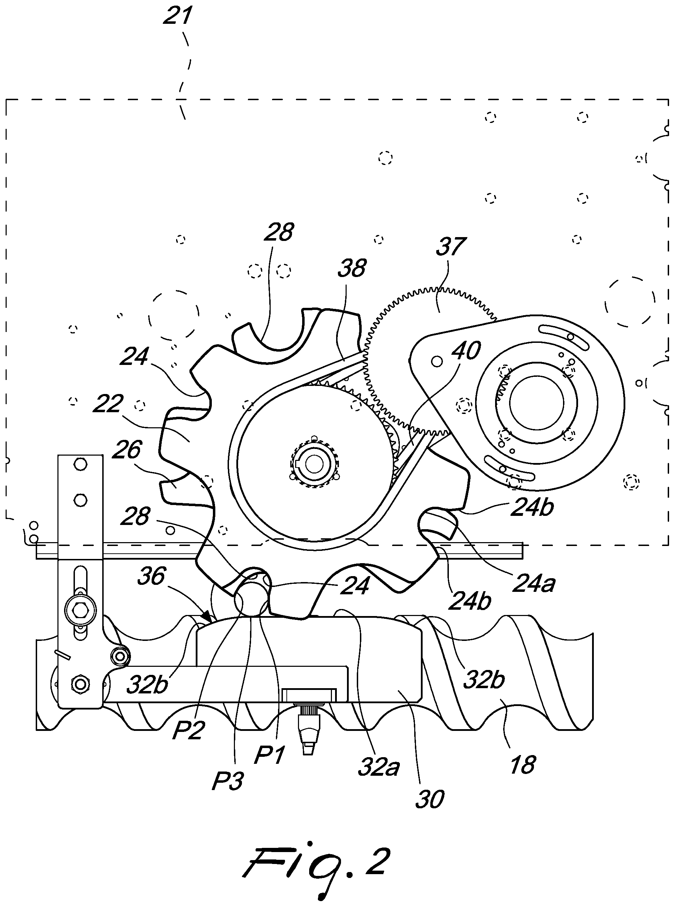

With initial reference to Figures 1 and 2, a capsuling machine 10 comprises a distributor 12 of capsules which is provided with a gearwheel 14 which is supported with a horizontal axis by a frame 15, and is driven in rotation by drive means (not shown). In the example described herein, the gearwheel 14 supports four beakers 16 peripherally, only one of which is illustrated in the figures for the sake of simplicity.

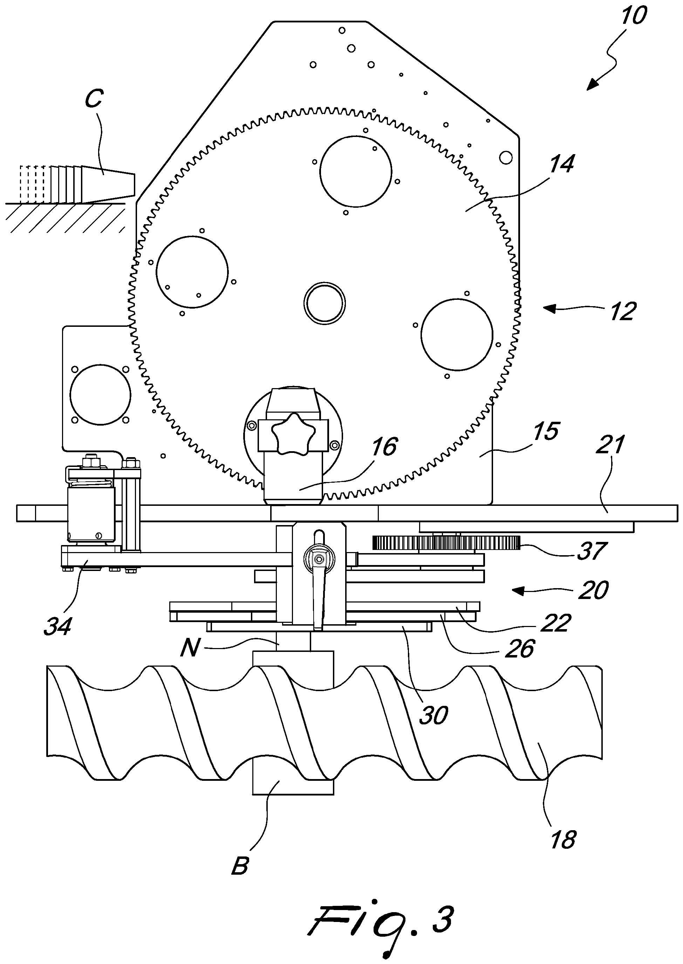

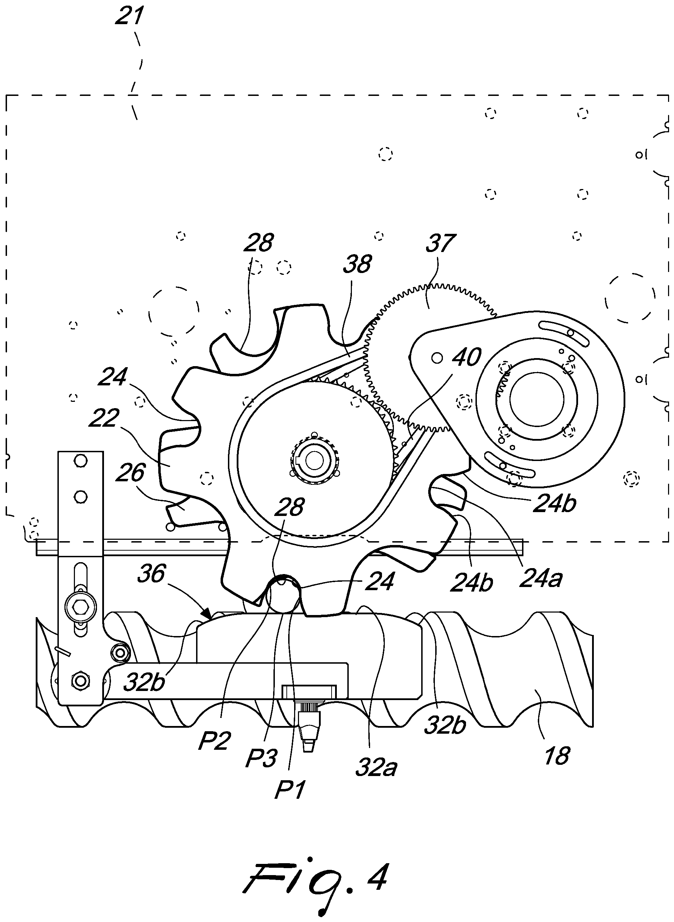

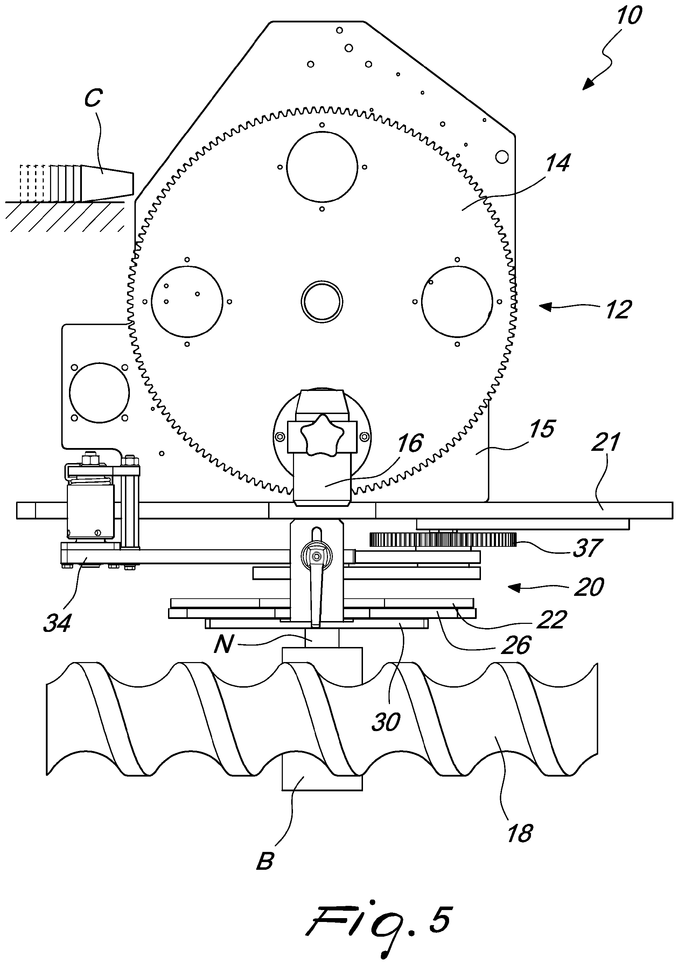

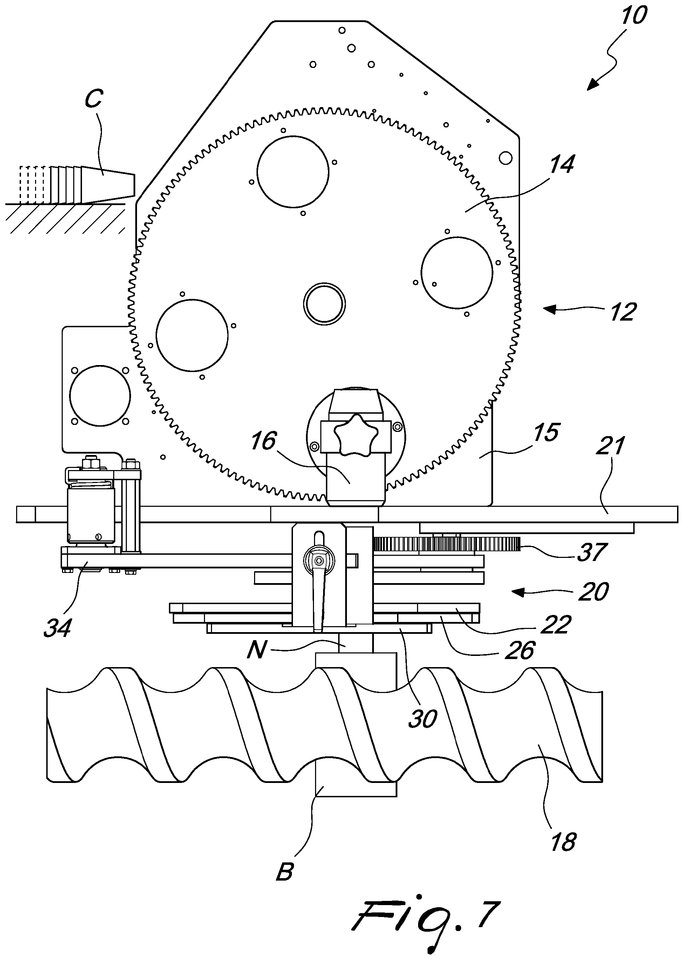

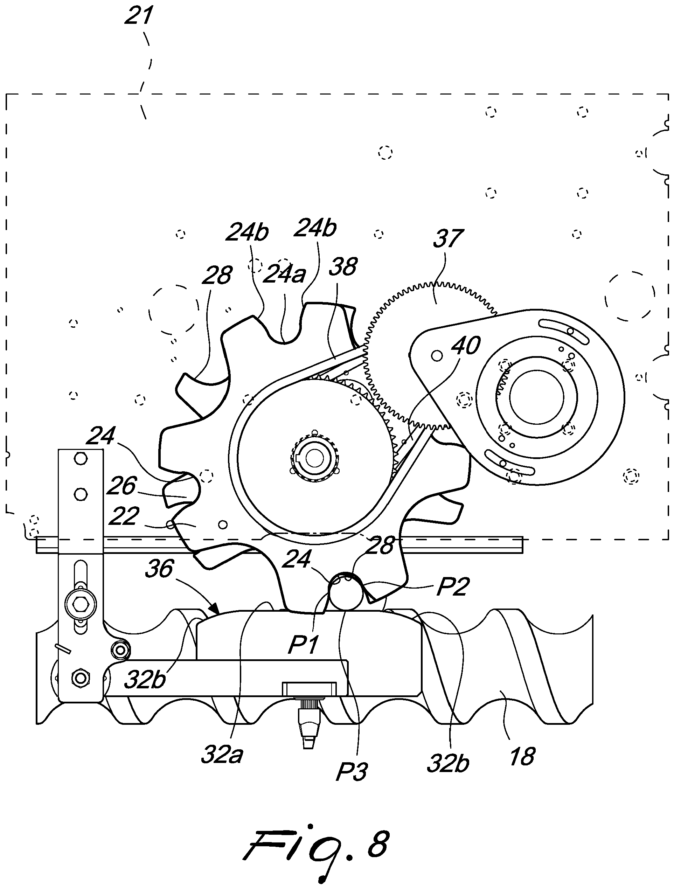

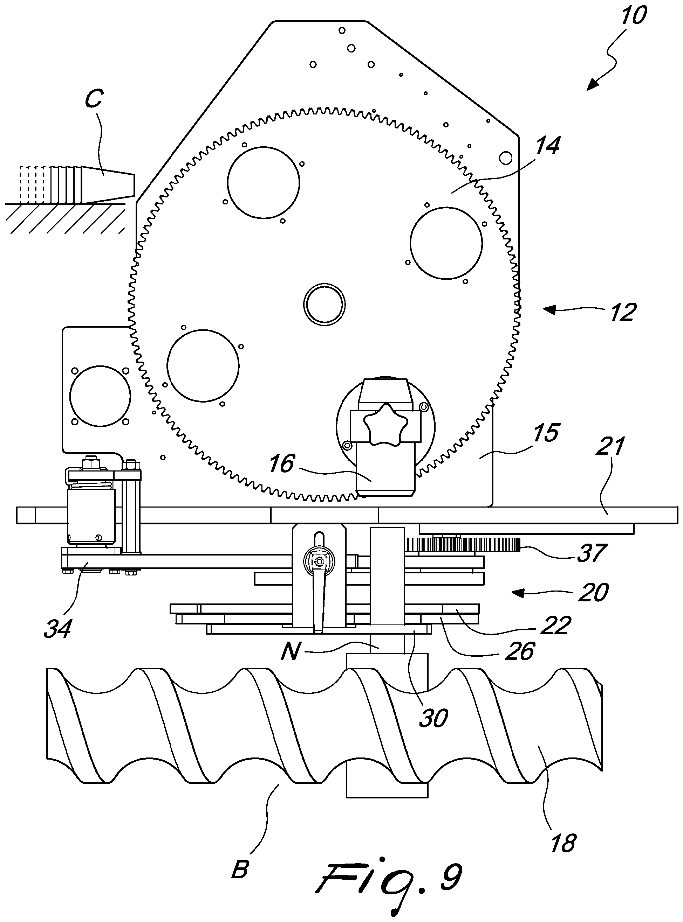

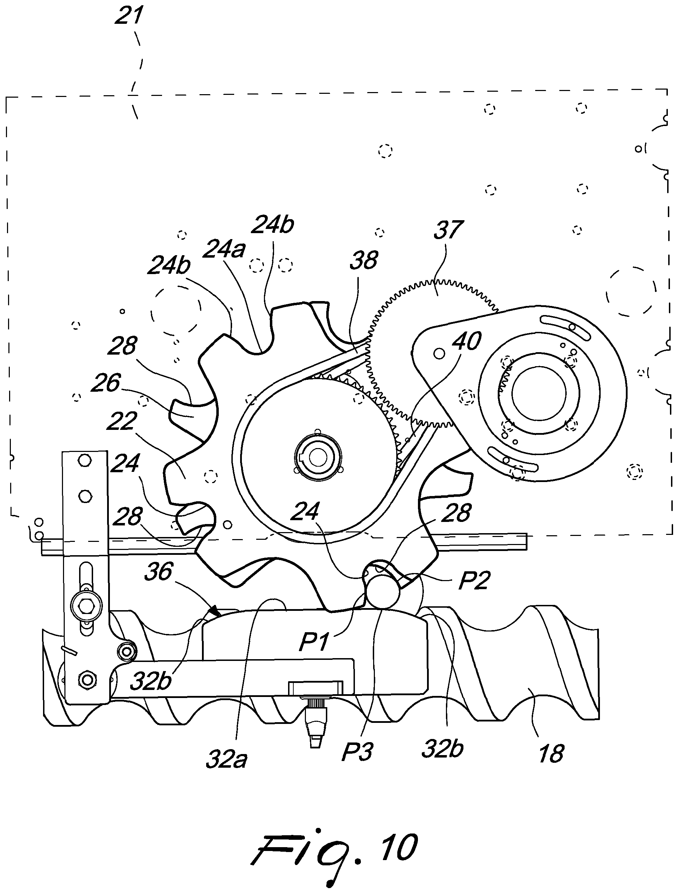

During the rotation of the gearwheel 14, the beakers 16 in succession take respective capsules C from a stack and, once the beakers reach a vertical release position with the open end directed downward (Figures 1-10), expel them in succession, pneumatically, onto the necks N of a row of bottles B which are made to advance below them by a motorized screw feeder 18.

In a per se known manner, the beakers 16 are supported so that they can rotate about a horizontal axis with respect to the gearwheel 14, on command by lever mechanisms (not shown) which are designed to maintain the beaker 16 in the above-mentioned release position for a predetermined segment of the rotation of the gearwheel 14. The above-mentioned lever mechanisms are not illustrated or described in detail here in that, as mentioned, they are conventional per se and lie outside the scope of the present invention.

The gearwheel 14 and the screw feeder 18 rotate continuously, so that the bottles B and the beakers 16 are always in motion during the expulsion of the capsule onto the neck N of the bottle B.

The machine 10 is furthermore provided with a neck guiding device 20, supported by a horizontal plate 21 which is integral with the frame 15, and adapted to guide the bottles B at the neck N while they pass below the distributor, so that the neck N is aligned with the respective beaker 16 during the expulsion of the capsule.

The neck guiding device 20 according to the invention comprises:
- a first motorized star conveyor guide 22 with a vertical axis, which is provided with a first series of peripheral seats 24 which are adapted to engage the neck N of the bottle B at a first level, and is driven to rotate about its own axis at a first speed,
- a second motorized star conveyor guide 26, coaxial to the first, which is provided with a second series of peripheral seats 28 which are adapted to engage the neck N of the bottle B at a second level, and is driven to rotate about its own axis at a second speed and in the same direction as the first motorized star conveyor guide 22, and
- a fixed counter-guide 30, supported beside the two star conveyor guides and having a guiding surface 32 that is adapted to engage the neck N of the bottle B,
- the peripheral seats 24 and 28 and the guiding surface 32 of the counter-guide 30 being contoured so as to engage the neck N at three respective points of contact P1, P2, P3 for a predetermined extent and substantially seamlessly, while keeping the neck substantially aligned with the respective beaker 16.

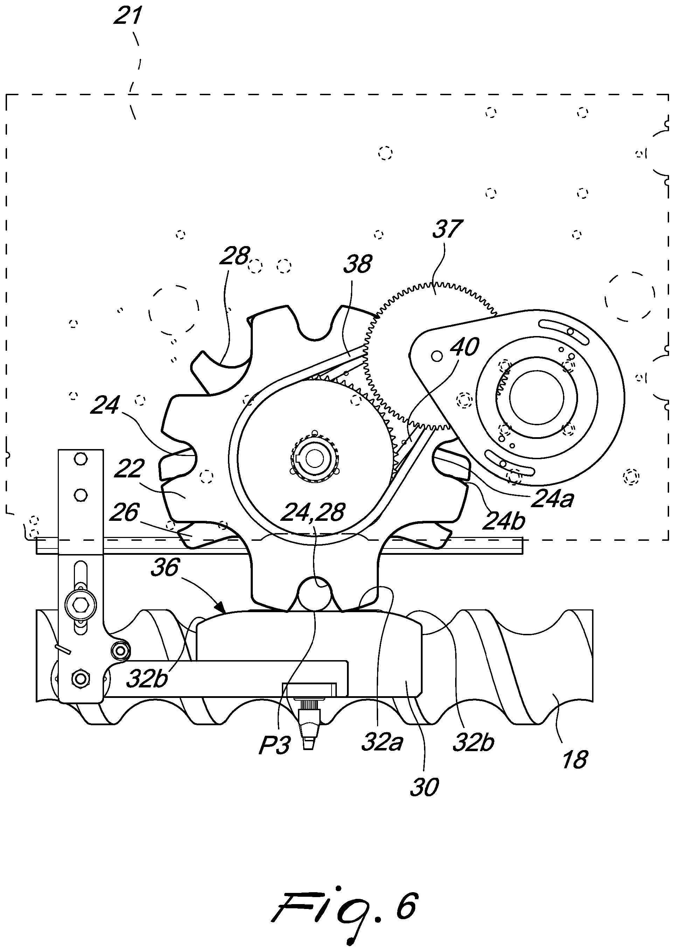

Advantageously, the three points of contact P1, P2, P3, although they move in space on respective horizontal levels, are never aligned except in the position shown in Figure 6, when the neck of the bottle is captive between the curved bottom of the peripheral seat 24 of the first star conveyor guide 22, and the counter-guide 30, so as to keep the neck N constantly captive on the horizontal plane along the segment in which it is guided by the device, and impose a preset trajectory on it.

The fixed guide 30 is mounted on a support 34 which is adjustable in the vertical position.

The motorized star conveyor guides 22, 26 are also advantageously supported so that they are adjustable in the vertical position, preferably independently.

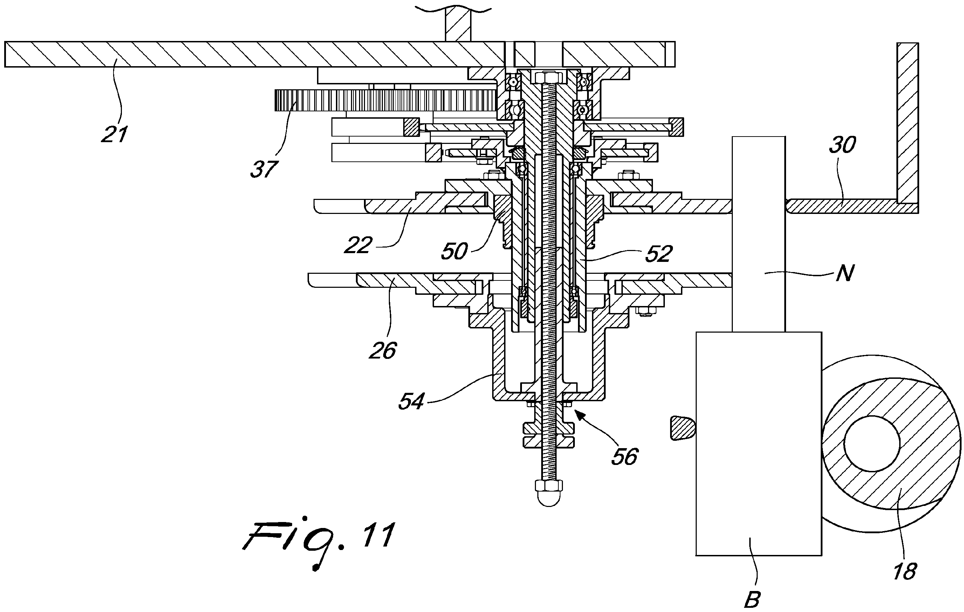

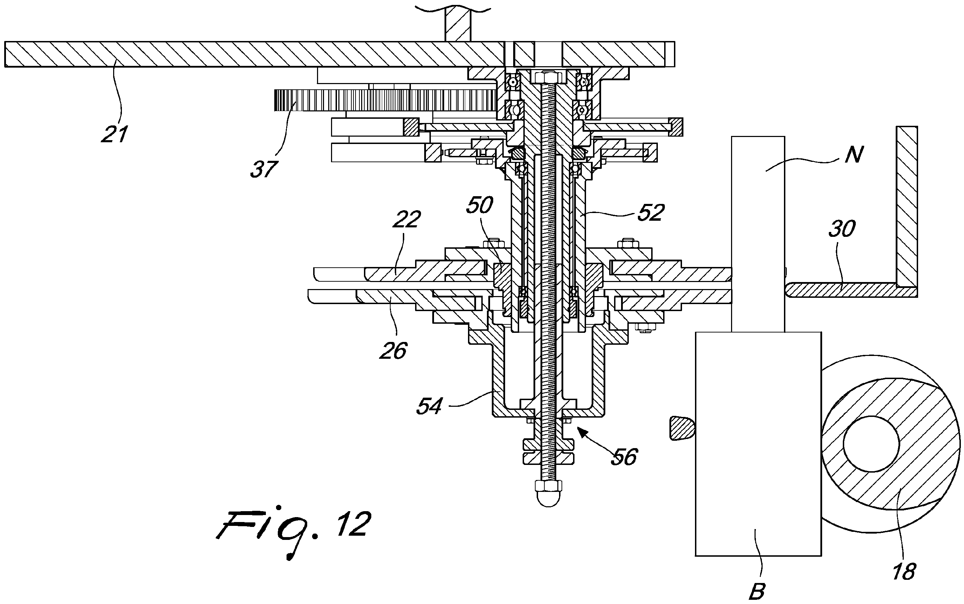

To this end, as illustrated in Figures 11, 12, the first motorized star conveyor guide 22 is mounted on a ring nut 50 which is fitted in a lockable position over a sleeve 52, while the second motorized star conveyor guide 26 is fixed to a bell 54 which surrounds the sleeve 52 and can move vertically on command by a screw/spindle nut mechanism 56 which is inserted into the sleeve 52.

The first motorized star conveyor guide 22 and the second motorized star conveyor guide 26 are both driven to rotate by a motor (not shown), by way of a reduction gearbox 37 and respective belt transmissions 38, 40 that have different transmission ratios.

The mathematical profiles of the seats 24, 28 and of the guiding surface 32 will not be described in detail here since they can be calculated automatically by dedicated software programs that are well known to any person skilled in the art.

Generally, in the embodiment described herein, the first seats 24 of the first motorized star conveyor guide 22, which rotate at a higher speed, have a substantially semicircular bottom 24a with a diameter equal to the diameter of the neck N of the bottle in the engagement region, and two diverging specular ends 24b. The second seats 28 of the second motorized star conveyor guide 26 have a substantially semicircular profile of larger diameter than the bottom 24a of the first seats 22. The guiding surface 32 has a straight central portion 32a and two opposite ends 32b which are shaped like a receiving guide.

In operation, as shown in Figures 1 - 10, which show in sequence some steps of advancement of the bottle, the neck N remains aligned with the respective beaker 16 along the entire length of the guiding surface 32, instead of at a single point as happens in the systems known today.

As the person skilled in the art will be able to appreciate, such circumstance considerably lengthens the useful time for inserting the capsule, making it possible to carry out the operation under conditions that are much less critical. This makes the machine much less sensitive to shape errors of the bottle, to folding irregularities of the muselet, and to any other external disturbance factor.

According to the declared aim, this makes it possible to considerably increase the efficiency of the machine without reducing, or even increasing, productivity.

While the neck N of the bottle advances in alignment with the beaker 16, the body of the bottle is retained in the respective groove of the screw feeder 18, similarly to conventional solutions. Therefore, in the segment in which the neck N is engaged by the guiding device 20, if there are shape errors the bottle can advance while keeping a slightly inclined posture.

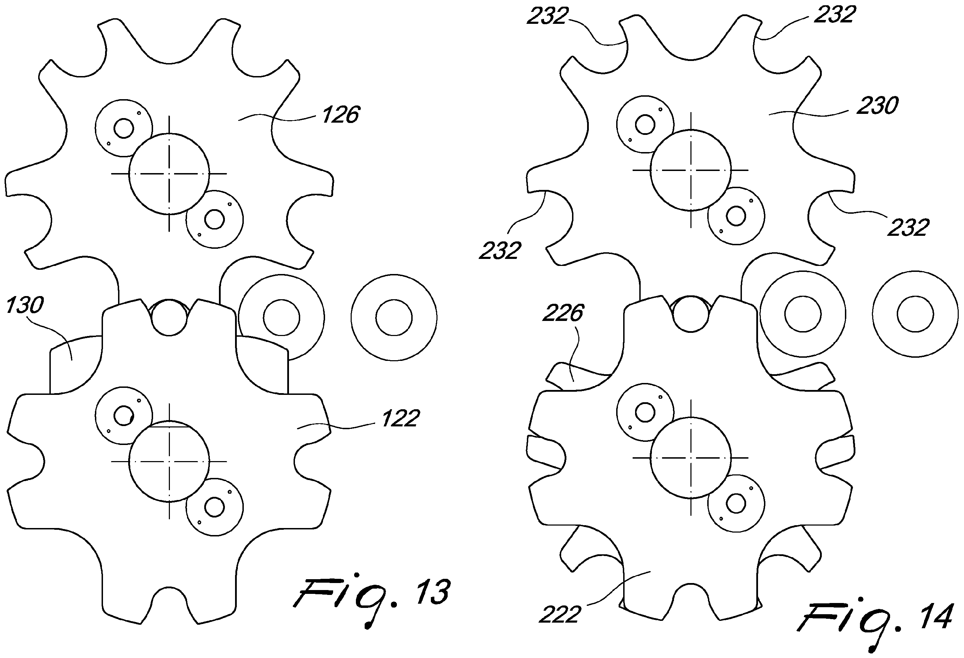

Figure 13 schematically illustrates a first alternative example not according to the invention, which differs from the previous one in that the two motorized star conveyor guides 122, 126 are not coaxial but are instead mutually opposite, the fixed guide 130 being positioned opposite to the second motorized star conveyor guide 126.

Figure 14 schematically illustrates a second alternative embodiment of the invention, which differs from the first embodiment described in that, in place of a fixed guide, there is a third motorized star conveyor guide 230 which is provided with respective third seats 232 with a profile identical to the second seats 228 of the second motorized star conveyor guide 226.

The third motorized star conveyor guide 232 is not coaxial but are instead arranged opposite to the other two, and it rotates at the same speed as the second motorized star conveyor guide 226 but in the opposite direction.

Some preferred embodiments of the invention have been described herein, but obviously the person skilled in the art may make various modifications and variations within the scope of protection of the claims.

For example, while in the embodiments described the motorized star conveyor guides are all driven to rotate by a single motor, obviously they can be independently motorized.

Furthermore, as mentioned, the profiles of the seats and of the guiding surface can be varied on the basis of the profiles of the necks of the bottles, the trajectory requirements, and the like.

Also, the bottles can be made to advance by a different conveyor device from the screw feeder described herein, e.g., by a motorized belt.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A neck guiding device (20) for bottling lines, comprising:
- a first motorized rotating guide (22), which is driven to rotate at a first speed about a first vertical axis and is provided with first peripheral seats (24),
- a second motorized rotating guide (26), which is driven to rotate at a second speed which is different from the first speed about a second vertical axis and is provided with second peripheral seats (28),
- a counter-guide (30),
said first motorized rotating guide (22) and said second motorized rotating guide (26) being coaxial,
said peripheral seats (24, 28) of the first motorized rotating guide (22) and of the second motorized rotating guide (26), and said counter-guide (32), being shaped so as to engage the neck (N) of a bottle (B) that passes between them in a vertical position at three respective points of contact (P1, P2, P3) for a predetermined extent and substantially seamlessly, in such a way as to guide said neck (N) along a preset trajectory, **characterized in that**
said first motorized rotating guide (22) rotates at a higher speed than said second motorized rotating guide (26),
said first seats (24) have a substantially semicircular bottom (24a) and two diverging specular ends (24b), and
said second seats (28) have a substantially semicircular profile of larger diameter than said bottom (24a) of the first seats (22).

2. The neck guiding device according to claim 1, **characterized in that** said counter-guide is fixed (30).

3. The neck guiding device according to claim 2, **characterized in that** said fixed counter-guide (30) is provided with a guiding surface (32) which has a straight central portion (32a) and two opposite ends (32b) which are shaped like a receiving guide.

4. The neck guiding device according to one of claims 2 or 3, **characterized in that** said fixed counter-guide (30) is mounted on a support (34) that is adjustable in position.

5. The neck guiding device according to one of claims 1-4, **characterized in that** at least one of said first motorized rotating guide (22) and said second motorized rotating guide (26) is supported in a manner that is adjustable in position.

6. The neck guiding device according to one of claims 1-5, **characterized in that** said counter-guide comprises a third motorized rotating guide (232) which lies opposite to the other two, is driven to rotate in the opposite direction with respect to said second motorized rotating guide (226) about a third vertical axis, and is provided with third peripheral seats (234).

7. The neck guiding device according to claim 6, **characterized in that** said third motorized rotating guide (232) rotates at the same speed as said second motorized rotating guide (226) and said third seats (234) have the same profile as said second seats (228).

8. The neck guiding device according to one of claims 1-7, **characterized in that** said first motorized rotating guide (22) and said second motorized rotating guide (26) are driven to rotate by a single motor (36) by means of respective transmission means (38, 40) which have different transmission ratios.

## Patentansprüche

1. Eine Halsführungsvorrichtung (20) für Flaschenabfüllanlagen, die Folgendes umfasst:
- eine erste motorisierte, sich drehende Führung (22), die angetrieben ist, um sich mit einer ersten Geschwindigkeit um eine erste vertikale Achse zu drehen, und mit ersten peripheren Sitzen (24) ausgestattet ist,
- eine zweite motorisierte, sich drehende Führung (26), die angetrieben ist, um sich mit einer zweiten Geschwindigkeit, die sich von der ersten Geschwindigkeit unterscheidet, um eine zweite vertikale Achse zu drehen, und mit zweiten peripheren Sitzen (28) ausgestattet ist,
- eine Gegenführung (30),
wobei die erste motorisierte, sich drehende Führung (22) und die zweite motorisierte, sich drehende Führung (26) koaxial sind,
wobei die peripheren Sitze (24, 28) der ersten motorisierten, sich drehenden Führung (22) und der zweiten motorisierten, sich drehenden Führung (26) und die Gegenführung (32) geformt sind, um den Hals (N) einer Flasche (B), die zwischen ihnen in einer vertikalen Position hindurchläuft, an drei entsprechenden Kontaktpunkten (P1, P2, P3) über einen vordefinierten Zeitraum und im Wesentlichen nahtlos zu halten, auf eine Art, die geeignet ist, den Hals (N) entlang einer vordefinierten Trajektorie zu führen; **dadurch gekennzeichnet,**
**dass** die erste motorisierte, sich drehende Führung (22) sich mit höherer Geschwindigkeit dreht als die zweite motorisierte, sich drehende Führung (26);
die ersten Sitze (24) haben einen im Wesentlichen halbkreisförmigen Boden (24a) und zwei sich verzweigende, spiegelnde Enden (24b), und
die zweiten Sitze (28) haben ein im Wesentlichen halbkreisförmiges Profil mit einem größeren Durchmesser als der Boden (24a) der ersten Sitze (22).

2. Die Halsführungsvorrichtung gemäß Anspruch 1, **dadurch gekennzeichnet, dass** die Gegenführung (30) fixiert ist.

3. Die Halsführungsvorrichtung gemäß Anspruch 2, **dadurch gekennzeichnet, dass** die fixierte Gegenführung (30) mit einer Führungsoberfläche (32) versehen ist, die einen geraden zentralen Abschnitt (32a) und zwei gegenüberliegende Enden (32b) hat, welche wie eine Einlassführung geformt sind.

4. Die Halsführungsvorrichtung gemäß einem der Ansprüche 2 oder 3, **dadurch gekennzeichnet, dass** die fixierte Gegenführung (30) an einer Halterung (34) montiert ist, die in ihrer Position verstellbar ist.

5. Die Halsführungsvorrichtung gemäß einem der Ansprüche 1-4, **dadurch gekennzeichnet, dass** die erste motorisierte, sich drehende Führung (22) und/oder die zweite motorisierte, sich drehende Führung (26) in ihrer Position verstellbar gelagert sind.

6. Die Halsführungsvorrichtung gemäß einem der Ansprüche 1-5, **dadurch gekennzeichnet, dass** die Gegenführung eine dritte motorisierte, sich drehende Führung (232) umfasst, die den anderen beiden gegenüberliegt, angetrieben ist, um sich in die der zweiten motorisierten, sich drehenden Führung (226) entgegengesetzte Richtung um eine dritte vertikale Achse zu drehen, und mit dritten peripheren Sitzen (234) ausgestattet ist.

7. Die Halsführungsvorrichtung gemäß Anspruch 6, **dadurch gekennzeichnet, dass** die dritte motorisierte, sich drehende Führung (232) sich mit derselben Geschwindigkeit dreht wie die zweite motorisierte, sich drehende Führung (226), und die dritten Sitze (234) dasselbe Profil haben wie die zweiten Sitze (228) .

8. Die Halsführungsvorrichtung gemäß einem der Ansprüche 1-7, **dadurch gekennzeichnet, dass** die erste motorisierte, sich drehende Führung (22) und die zweite motorisierte, sich drehende Führung (26) von einem einzigen Motor (36) über jeweilige Getriebemittel (38, 40) mit verschiedenen Übertragungsverhältnissen drehend angetrieben werden.

## Revendications

1. Dispositif de guidage de goulot (20) pour lignes d'embouteillage, comprenant :
- un premier guide rotatif motorisé (22) qui est entraîné en rotation à une première vitesse autour d'un premier axe vertical et qui est pourvu de premiers sièges périphériques (24),
- un deuxième guide rotatif motorisé (26) qui est entraîné en rotation à une deuxième vitesse qui est différente de la première vitesse autour d'un deuxième axe vertical et qui est pourvu de deuxièmes sièges périphériques (28),
- un contre-guide (30),
ledit premier guide rotatif motorisé (22) et ledit deuxième guide rotatif motorisé (26) étant coaxiaux,
lesdits sièges périphériques (24, 28) du premier guide rotatif motorisé (22) et du deuxième guide rotatif motorisé (26), et ledit contre-guide (32), ayant une forme leur permettant de se mettre en prise avec le goulot (N) d'une bouteille (B) qui passe entre eux dans une position verticale en trois points de contact respectifs (P1, P2, P3) pour une étendue prédéterminée et de façon substantiellement continue, de manière à guider ledit goulot (N) le long d'une trajectoire préétablie, **caractérisé en ce que** :
ledit premier guide rotatif motorisé (22) tourne à une plus grande vitesse que ledit deuxième guide rotatif motorisé (26),
lesdits premiers sièges (24) ont un fond substantiellement semi-circulaire (24a) et deux extrémités spéculaires divergentes (24b), et
lesdits deuxièmes sièges (28) ont un profil substantiellement semi-circulaire de diamètre plus grand que ledit fond (24a) des premiers sièges (22).

2. Dispositif de guidage de goulot selon la revendication 1, **caractérisé en ce que** ledit contre-guide est fixe (30).

3. Dispositif de guidage de goulot selon la revendication 2, **caractérisé en ce que** ledit contre-guide fixe (30) est pourvu d'une surface de guidage (32) qui a une partie centrale droite (32a) et deux extrémités opposées (32b) qui ont la forme d'un guide récepteur.

4. Dispositif de guidage de goulot selon l'une des revendications 2 et 3, **caractérisé en ce que** ledit contre-guide fixe (30) est monté sur un support (34) qui est réglable en position.

5. Dispositif de guidage de goulot selon l'une des revendications 1 à 4, **caractérisé en ce qu'**au moins l'un desdits premier guide rotatif motorisé (22) et deuxième guide rotatif motorisé (26) est supporté d'une manière qui est réglable en position.

6. Dispositif de guidage de goulot selon l'une des revendications 1 à 5, **caractérisé en ce que** ledit contre-guide comprend un troisième guide rotatif motorisé (232) qui se trouve en face des deux autres, est entraîné en rotation dans la direction opposée par rapport audit deuxième guide rotatif motorisé (226) autour d'un troisième axe vertical, et est pourvu de troisièmes sièges périphériques (234).

7. Dispositif de guidage de goulot selon la revendication 6, **caractérisé en ce que** ledit troisième guide rotatif motorisé (232) tourne à la même vitesse que ledit deuxième guide rotatif motorisé (226) et lesdits troisièmes sièges (234) ont le même profil que lesdits deuxièmes sièges (228).

8. Dispositif de guidage de goulot selon l'une des revendications 1 à 7, **caractérisé en ce que** ledit premier guide rotatif motorisé (22) et ledit deuxième guide rotatif motorisé (26) sont entraînés en rotation par un seul moteur (36) à l'aide de moyens de transmission respectifs (38, 40) qui ont des rapports de transmission différents.
